# EUROPEAN PATENT SPECIFICATION

(11) **EP 2 309 788 B1**
(45) Date of publication and mention of the grant of the patent: **16.12.2015**
(21) Application number: 09804499.3
(22) Date of filing: 05.08.2009
(51) Int. Cl.: H04W 16/04, H04W 76/02, H04L 5/14, H04L 27/00

(54) **METHODS AND DEVICE FOR NETWORK RESOURCE CONFIGURATION**
VERFAHREN UND VORRICHTUNG ZUR KONFIGURIERUNG VON NETZBETRIEBSMITTELN
PROCÉDÉS ET DISPOSITIF DE CONFIGURATION DE RESSOURCE RÉSEAU

(30) Priority: 05.08.2008 CN 200810142288
(43) Date of publication of application: 13.04.2011
(60) Divisional application: 15191151.8
(73) Proprietor: Huawei Technologies Co., Ltd., Longgang District Shenzhen, Guangdong 518129 (CN)
(72) Inventor: WANG, Shukun, Shenzhen Guangdong 518129 (CN); ZHOU, Zhaojie, Shenzhen Guangdong 518129 (CN); LV, Boya, Shenzhen Guangdong 518129 (CN)
(74) Representative: Kreuz, Georg Maria
(86) International application number: PCT/CN2009/073097
(87) International publication number: WO 2010/015199

(56) References cited:
- EP-A1- 1 954 065
- WO-A1-01/08434
- WO-A1-2010/148979
- CN-A- 1 080 091
- CN-A- 1 917 661
- CN-A- 1 996 819
- CN-A- 101 351 037
- ERICSSON: 'Performance requirement scenario for 64QAM+MIMO, TSG-RAN WG4 Meeting #46, R4-080500, Sorrento, Italy', February 2008 XP008143086

## Description

### FIELD OF THE INVENTION

The present invention relates to the field of mobile communication technology, and in particular, to a method, a device, and a system for network resource configuration.

### BACKGROUND OF THE INVENTION

High Speed Downlink Packet Access (HSDPA) technology may enhance throughput of a downlink non-real-time packet service, thereby improving a spectral efficiency of a radio access side.

In order to further enhance a radio performance of the HSDPA, a higher order modulation technology (for example, a 16 Quadrature Amplitude Modulation (16QAM) and a 64 Quadrature Amplitude Modulation (64QAM)) and a Multiple-input Multiple-output (MIMO) technology are introduced in the HSDPA.

In a Wideband Code Division Multiple Access (WCDMA) system, the 64QAM technology and the MIMO technology in a downlink direction have been introduced. For example, User Equipment (UE) may support the 64QAM mode and the MIMO mode respectively; a Radio Network Controller (RNC) may support the 64QAM mode and the MIMO mode respectively or at the same time; and a NodeB (a radio frequency transceiver) may support the 64QAM mode and the MIMO mode respectively or at the same time.

With the development of the mobile communication technology, the 64QAM technology and the MIMO technology are used in a combination manner. The combination of the two technologies may bring a higher data rate and a larger channel capacity, and may support more service types. Therefore, the UE, the RNC, and the NodeB start to develop towards a direction of supporting the combination of the 64QAM technology and the MIMO technology.

The prior art has at least the following disadvantages: in a mobile communication network, the development and the substitution of the UE, the RNC, and the NodeB cannot be completely synchronous, that is, the communication capabilities of the UE, the RNC, and the NodeB may not match; in this case, the RNC may perform false configuration on the NodeB, and the NodeB cannot correctly understand the false configuration, and cannot be correctly configured. Here, the NodeB may return failure information, to result in a failure of the establishment of a Radio Link (RL). Due to the failure of the establishment of the RL, the UE completely fails to establish the connection with the NodeB, and cannot use the network. If the NodeB does not return the failure information and is configured according to the false information, the communication between the UE and the network side is disordered, and the UE cannot use the network normally, thereby seriously affecting the network quality and the mobile communication user experience.

WO 01/08434 A1 relates to a system and method of communicating operating capabilities in a telecommunication network or networks. This invention provides the creation of a list of operating capabilities at a network node upstream from the mobile station. A comparison of this list with another list received from a remote telecommunication element to negotiate operating capabilities at a call set up is achieved without involving communication resources between the mobile station and the network node.

EP 1954065 A1, which is prior art according to Art. 54(3) EPC, relates to a method, system and device for distributing resources of a base station node (Node B) to enable F-DPCH resources of a local cell to be sufficiently used. The Node B reports to a RNC the F-DPCH capability of the local cell so as to provide a decision-making basis about using or not using the F-DPCH to the RNC. If the local cell supports F-DPCH, when the UE initiates an RRC connection establishment request, the RNC instructs the Node B to distribute the F-DPCH and HSDPA resources to the UE, otherwise the RNC instructs the Node B to distribute DPDCH and DPDCCH resources to the UE.

CN 1917661 A relates to a method, system and device for distributing resources of a base station node (Node B), so as to enable F-DPCH resources of a local cell to be sufficiently used. The Node B reports to the RNC the F-DPCH capability of the local cell so as to provide a decision-making basis about using or not using the F-DPCH to the RNC. The F-DPCH capability of the local cell can be reported in a newly added IE or extended existing IE of the Audit Response message and Resource Status Indication message.

CN 1996819 A relates to a method for dealing with a HARQ (Hybrid Automatic Repeat request). SRNC acquires and stores information about a combining type of HARQ supported by a NodeB. If the combining type of HARQ supported by the NodeB only comprises Chase combining or Incremental redundancy combining, a radio link setup massage or a radio link reconfiguration message does not comprise information element carrying information of a combining type of HARQ.

CN 101080091 A relates to a method for a RNC obtaining capability of a base station. The RNC sends an audit request message to the base station. Responsive to the message, the base station returns a response message, the response message carrying capability indication information for indicating whether the base station supports CPC (Continuous Packet Connectivity). The RNC obtains the capability indication information in the response message. Thus, the CPC technology can be applied correctly.

ERICSSON:"Performance requirement scenario for 64QAM+MIMO, TSG-RAN WG4 Meeting #46, R4-080500, Sorrento, Italy", relates to settle the requirement scenario for 64QAM+MIMO. The FRC for simulation of combination of 64QAM and MIMO is showed.

### SUM MARY OF THE INVENTION

Accordingly, the present invention is directed to a method for network resource configuration, such that when a communication capability of a UE and a communication capability of an access network device do not match, the UE may use the network normally, thereby preventing communication obstacles of communication users, and improving the network quality.

The present invention is also directed to a device and a system for network resource configuration.

One aspect of the present invention provides a method for network resource configuration, where the method includes:
receiving, by an RNC, capability information of a NodeB during a synchronization process with the NodeB, in which the capability information includes information indicating whether the NodeB supports the 64QAM mode, whether the NodeB supports the MIMO mode, and whether the NodeB supports the combination mode of the 64QAM and the MIMO;
receiving, by the RNC, a request initiated by User Equipment UE, the request comprising capability information of the UE; after receiving the request initiated by the UE, configuring, by the RNC, a resource of the NodeB according to the capability information of the UE and the capability information of the NodeB; and
configuring, by the RNC, the UE according to the configured resource of the NodeB.

One aspect of the present invention provides a RNC. The RNC is adapted to receive capability information of a NodeB during a synchronization process with the NodeB, wherein the capability information comprises information indicating whether the NodeB supports the 64QAM mode, whether the NodeB supports the MIMO mode, and whether the NodeB supports the combination mode of the 64QAM and the MIMO; and the RNC is further adapted to receive a request sent by the UE, the request comprising capability information of the UE, and configure a resource of the NodeB according to the capability information of the UE and the capability information of the NodeB; and configure a resource of the UE according to the configured resource of the NodeB.

One aspect of the present invention further provides a method for network resource configuration. The method includes:
sending, by a NodeB, capability information of the NodeB to a Radio Network Controller, RNC, wherein the capability information comprises information indicating whether the NodeB supports the 64QAM mode, whether the NodeB supports the MIMO mode, and whether the NodeB supports the combination mode of the 64QAM and the MIMO;
receiving, by the NodeB, a configuration information, wherein the configuration information is sent by RNC according to the capability information of the NodeB and a capability of User Equipment, UE, after the RNC received a request initiated by the UE, the request comprising capability information of the UE; and
configuring, by the NodeB, a resource of the NodeB according to the configuration information.

In the method, the device, and the system for network resource configuration according to the embodiments of the present invention, in each embodiment, during a synchronization process of an RNC and a radio transceiver, the radio transceiver explicitly states the capability thereof, such that the RNC clearly knows the capability of the radio transceiver, and may not perform configuration not matching the capability on the radio transceiver, thereby solving a problem that a UE cannot use the network resulting from the fact that when the configuration and the capability do not match, the radio transceiver cannot successfully establish the RL or a false mode is configured and information of the radio transceiver cannot be understood.

### BRIEF DESCRIPTION OF THE DRAWINGS

FIG. 1 is a schematic view of radio access network resource configuration in the prior art;
FIG. 2 is a flow chart of a first method for radio access network resource configuration according to an embodiment of the present invention;
FIG. 3 is a schematic view of a resource auditing process between an RNC and a NodeB according to an embodiment of the present invention;
FIG. 4 is a flow chart of a second method for radio access network resource configuration according to an embodiment of the present invention;
FIG. 5 is a schematic view of synchronizing resource configuration between an RNC and a NodeB according to an embodiment of the present invention;
FIG. 6 is a schematic structural view of a NodeB according to an embodiment of the present invention;
FIG. 7 is a schematic structural view of a system according to an embodiment of the present invention;
FIG. 8 is a flow chart of a third method for radio access network resource configuration according to an embodiment of the present invention;
FIG. 8A is another schematic structural view of a NodeB according to an embodiment of the present invention;
FIG. 8B is another schematic structural view of a system according to an embodiment of the present invention;
FIG. 9 is a flow chart of a fourth method for radio access network resource configuration according to an embodiment of the present invention;
FIG. 9A is another schematic structural view of a NodeB according to an embodiment of the present invention;
FIG. 9B is another schematic structural view of a system according to an embodiment of the present invention; and
FIG. 10 is a flow chart of a fifth method for radio access network resource configuration according to an embodiment of the present invention.

### DETAILED DESCRIPTION OF THE EMBODIMENTS

In order to make the objectives, technical solutions, and advantages of the present invention more comprehensible, a detailed description of the present invention is given below by reference to the accompanying drawings.

The present invention provides several embodiments, which are respectively introduced in detail in the following. It should be noted that an RNC and a NodeB mentioned in each embodiment of the present invention are used as an example, and may also be other similar RNCs and radio transceivers. 64QAM in each embodiment of the present invention is only used as an example, and may also be other similar modulation-demodulation technologies.

Communication capabilities of a UE and a radio access network device may not match, for example, whether combination of the 64QAM technology and an MIMO technology is supported, such that in some cases, the UE cannot use the network, and communication with a network side may be disordered.

When the UE only supports the 64QAM technology or the MIMO technology, no matter whether the RNC and the NodeB support the combination mode of the 64QAM and the MIMO, the UE may use the network normally. The reason is that, during a process of reporting a capability, the UE only reports that the UE supports the 64QAM or supports the MIMO, but when assigning a resource of the NodeB according to the capability reported by the UE, the RNC only instructs the NodeB to perform the communication according to the 64QAM mode or the MIMO mode. The NodeB usually may support the two modes, so as to successfully establish the communication with the UE according to the mode configured by the RNC.

When the UE supports the combination mode of the 64QAM and the MIMO, if the RNC does not support the combination mode of the two technologies, no matter whether the NodeB supports the combination mode of the two technologies, the UE may use the network normally. The reason is that, if the capability reported by the UE to the RNC is that the UE supports the combination mode of the 64QAM and the MIMO, the RNC may select the 64QAM mode or the MIMO mode to configure the NodeB according to a universal algorithm. Therefore, if the NodeB communicates with the UE in the 64QAM mode or the MIMO mode, the communication is not disordered.

However, when the UE supports the combination mode of the 64QAM and the MIMO, and the RNC also supports the combination mode of the 64QAM and the MIMO, if the NodeB supports the 64QAM mode and the MIMO mode at the same time but does not support the combination mode of the two technologies, the UE may not use the network. In the following, reasons of the disordered communication between the UE and the network side are specifically analyzed.

In the mobile communication network, the RNC may acquire the capability of the NodeB. The RNC may clearly know whether the NodeB supports the 64QAM mode or the MIMO mode through the acquired capability of the NodeB. However, when reporting the capability, the NodeB respectively and independently reports whether the NodeB supports the 64QAM mode or the MIMO mode, and does not report whether the NodeB supports the combination mode of the 64QAM and the MIMO. Therefore, when the NodeB supports the 64QAM mode and the MIMO mode at the same time, the RNC cannot clearly know whether the NodeB supports the combination mode of the 64QAM and the MIMO according to the reported capability information. Meanwhile, the RNC supports the combination mode of the 64QAM and the MIMO, such that according to the capability reported by the NodeB, the RNC may mis-judge that the NodeB supports the combination mode of the 64QAM and the MIMO.

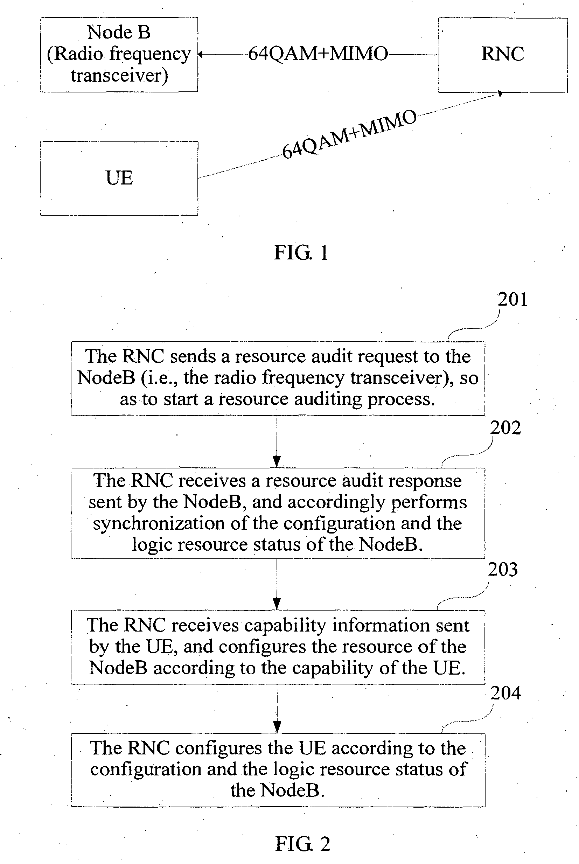

In the case that the RNC mis-judges that the NodeB supports the combination mode of the 64QAM and the MIMO, as shown in FIG. 1, when the UE supporting the combination mode of the 64QAM and the MIMO establishes the connection with the network, the UE may not use the network. Since the UE supports the combination mode of the 64QAM and the MIMO, in the capability information reported to the RNC, the UE may explicitly report that the UE supports the combination mode of the 64QAM and the MIMO, and in FIG. 1, 64QAM+MIMO represents that the UE supports the combination mode of the 64QAM and the MIMO. For example, when a Radio Resource Control (RRC) connection is established between the UE and the RNC, the UE reports the capability to the RNC, and the category of the UE may be Category19 or Category20, which represents that the UE supports the combination mode of the 64QAM and the MIMO.

Due to the synchronization of the configuration and the logic resource status of the NodeB between the NodeB and the RNC, the RNC knows the capability of the NodeB; however, in this case, the RNC mis-judges that the NodeB supports the combination mode of the 64QAM and the MIMO. The RNC configures the resource of the NodeB according to the capability reported by the UE, and instructs the NodeB to establish the connection with the current UE in the combination mode of the 64QAM and the MIMO, thereby performing the communication. For example, after the RNC establishes the RRC connection with the UE, the RNC performs RL reconfiguration, and instructs the NodeB to use the combination mode of the 64QAM and the MIMO for the current UE.

Here, the NodeB cannot understand configuration information of the RNC, and may send false information to the RNC, such that the establishment of the RL fails. The RNC may notify the UE that the establishment of the RL fails, and the UE cannot establish the communication with the NodeB. Therefore, the UE cannot use the network, and cannot perform the radio communication.

When the RNC configures the combination mode of the 64QAM and the MIMO for the NodeB, the NodeB may also configure the 64QAM mode and the MIMO mode for the RL of the current UE according to the indication of the RNC. However, compared with the combination mode of the 64QAM and the MIMO, in the case of configuring the single 64QAM mode and configuring the single MIMO mode, channel coding formats and Channel Quality Indication (CQI) reference tables of a High Speed Shared Control Channel (HS-SCCH) and a High Speed Dedicated Physical Control Channel (HS-DPCCH) are different. Therefore, when the NodeB configures the 64QAM and the MIMO for the UE supporting the combination mode of the 64QAM and the MIMO at the same time, the NodeB cannot understand or makes a false understanding, when the UE reports the CQI, and the changes of the channel coding format of the HS-SCCH may result in that the Node B makes a false understanding on or cannot understand the information of the UE. Therefore, under the above situation, the NodeB and the UE cannot correctly understand the information of each other, such that the communication between the UE and the network side is disordered, and the UE cannot use the network normally.

Through the method for radio access network resource configuration as shown in FIG. 2, the RNC may clearly and correctly know the capability, the configuration, and the logic resource status of the NodeB, so as to correctly configure the resource.

The method for radio access network resource configuration includes the following steps.

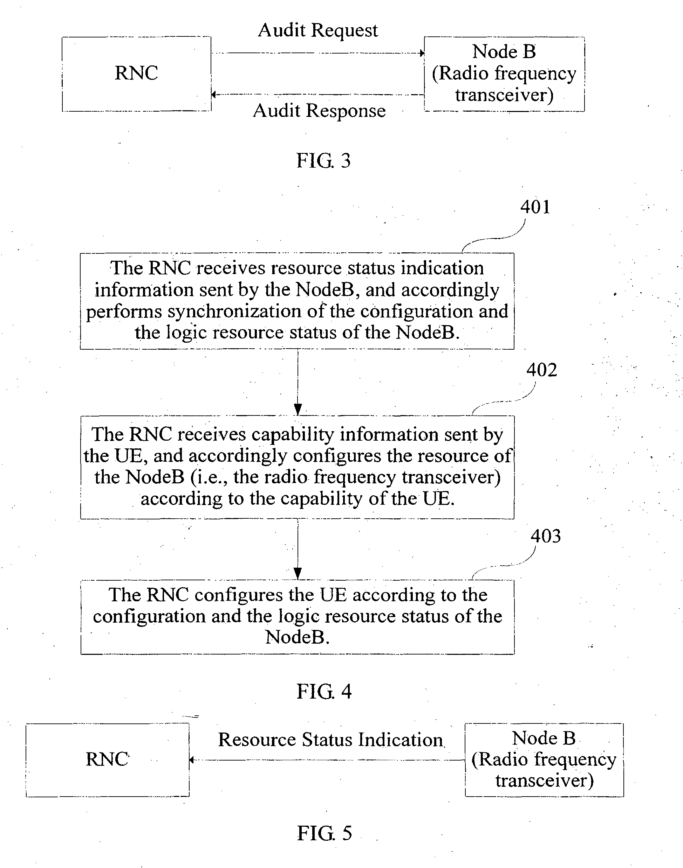

In Step 201, the RNC sends a resource audit request to the NodeB, so as to start a resource auditing process. When the RNC sends the resource audit request, it is possible that the RNC receives an audit request indication sent by the NodeB, so as to send the resource audit request. For example, as shown in FIG. 3, the RNC sends a message Audit Request to the NodeB, and sets an Information Element (IE) being Start of Audit Sequence in the Audit Request as start of audit sequence or not start of audit sequence, so as to start a new audit sequence number, or not start the new audit sequence number and only complete the part not completed by the last audit.

In Step 202, the RNC receives a resource audit response sent by the NodeB, and acquires the information, such as the configuration situation and the logic resource status of the NodeB, through the resource audit response sent by the NodeB. Accordingly, the RNC completes synchronizing the configuration and the logic resource status of the NodeB with the NodeB. The resource audit response sent by the NodeB includes the capability information of the NodeB, that is, whether the NodeB supports the 64QAM mode, whether the NodeB supports the MIMO mode, and whether the NodeB supports the combination mode of the 64QAM and the MIMO. For example, as shown in FIG. 3, the RNC receives a resource audit response information being Audit Response sent by the NodeB. The Audit Response information includes three IEs, respectively indicating that the NodeB supports the 64QAM mode, supports the MIMO mode, and does not support the combination mode of the 64QAM and the MIMO. The RNC acquires that the NodeB does not support the combination mode of the 64QAM and the MIMO according to the received resource audit response, and completes the synchronization of the resource configuration.

In Step 203, when the UE initiates a call, the RNC receives the capability information reported by the UE, and accordingly acquires the capability of the UE. After acquiring the capability of the UE, the RNC configures the resource of the NodeB for the current UE according to the capability of the UE and the capability of the NodeB, so as to establish the communication between the UE and the NodeB.

In Step 202, the RNC completes the synchronization with the NodeB, and clearly acquires the capability, the configuration situation, and the logic resource status of the NodeB. In Step 203, if the capability of the UE and the capability of the NodeB do not match, the mode capable of being supported by the NodeB is selected for performing configuration. When the capability of the UE and the capability of the NodeB do not match, it refers to the situation that the NodeB cannot support the mode supported by the UE, for example, the UE supports the combination mode of the 64QAM and the MIMO, but the NodeB does not support the combination mode.

For example, the UE initiates a call request, the UE sends a part of the capability information in an RRC connection request sent to the RNC, and sends the residual capability information in an RRC connection establishment complete message. The capability information reported by the UE to the RNC includes a category of the UE, for example, Cat19 or Cat20, which represents that the UE supports the combination mode of the 64QAM and the MIMO, and also supports the 64QAM mode and the MIMO mode. After receiving the capability information reported by the UE, the RNC sends an RL reconfiguration request to the NodeB. The RNC clearly knows that the NodeB supports the 64QAM mode and the MIMO mode, but does not support the combination mode of the 64QAM and the MIMO, and the UE supports the combination mode of the 64QAM and the MIMO, such that in the RL reconfiguration request, the RNC configures that the NodeB establishes the communication with the UE in the 64QAM mode, or establishes the communication with the UE in the MIMO mode.

In Step 204, after completing the configuration of the NodeB, the RNC configures the UE according to the configuration of the NodeB, so as to complete the synchronization of the resource between the UE and the NodeB. For example, in the RL reconfiguration request, the RNC configures that the NodeB has the MIMO mode, and according to the configuration of the NodeB, the RNC configures that the UE establishes the communication in the MIMO mode through radio bearer establishment information.

According to the embodiment, when the RNC performs the synchronization of the capability, the configuration situation, and the logic resource status of the NodeB with the NodeB, the resource audit response information sent by the NodeB includes the IE indicating whether the NodeB supports the combination mode of the 64QAM and the MIMO, such that the RNC clearly knows whether the NodeB supports the combination mode of the 64QAM and the MIMO, and does not configure the combination mode for the NodeB, when the NodeB does not support the mode. Therefore, the situation, in which the RNC performs the false configuration on the NodeB to result in that the NodeB cannot establish the RL, is avoided. Here, the NodeB can successfully establish the RL, and the UE may use the network normally. Meanwhile, when the RNC configures the NodeB and the UE, the synchronization of the resource between the NodeB and the UE is achieved, and the situation, in which the NodeB and the UE do not understand or make a false understanding on the information of each other, is avoided, such that the communication between the UE and the network side is not disordered, and the UE may use the network normally.

The method for radio access network resource configuration as shown in FIG. 4 may also solve the problems existing in the prior art. The method for radio access network resource configuration includes the following steps.

In Step 401, the RNC receives resource status indication information sent by the NodeB, and accordingly performs the synchronization of the capability, the configuration situation, and the logic resource status of the NodeB with the NodeB. The resource status indication sent by the NodeB includes capability information of the NodeB, that is, whether the NodeB supports the 64QAM mode, whether the NodeB supports the MIMO mode, and whether the NodeB supports the combination mode of the 64QAM and the MIMO. For example, as shown in FIG. 5, the NodeB sends the resource status indication information to the RNC. The information includes three IEs, respectively indicating that the NodeB supports the 64QAM mode, supports the MIMO mode, and does not support the combination mode of the 64QAM and the MIMO. The NodeB sends the resource status indication information to the RNC, when any one of the following situations occurs: local cells of the NodeB are increased, that is, the statuses of the local cells are changed to be existing; deleting the local cells of the NodeB, that is, the statuses of the local cells are changed to be not existing; the capabilities of the local cells are changed; the capabilities of the cells and/or a resource running status of the NodeB are changed; a common physical channel and/or a common transmission channel capability of the NodeB is changed; a communication control port resource running status of the NodeB is changed; and a local cell group resource capability of the NodeB is changed.

According to the received resource status indication, the RNC acquires that the NodeB does not support the combination mode of the 64QAM and the MIMO, so as to complete the synchronization of the resource configuration.

In Step 402, when the UE initiates a call, the RNC receives the capability information reported by the UE, and accordingly acquires the capability of the UE. After acquiring the capability of the UE, the RNC configures the resource of the NodeB for the current UE, so as to establish the communication between the UE and the NodeB.

For example, the UE initiates a call request, the UE sends a part of the capability information in an RRC connection request sent to the RNC, and sends the residual capability information in an RRC connection establishment complete message. The capability information reported by the UE to the RNC includes a category of the UE, for example, Cat19 or Cat20, which represents that the UE supports the combination mode of the 64QAM and the MIMO, and also supports the 64QAM mode and the MIMO mode. After receiving the capability information reported by the UE, the RNC sends an RL reconfiguration request to the NodeB. In Step 401, the RNC completes the synchronization with the NodeB, and clearly acquires the capability, the configuration situation, and the logic resource status of the NodeB. Therefore, the RNC clearly knows that the NodeB supports the 64QAM mode and the MIMO mode, but does not support the combination mode of the 64QAM and the MIMO, such that in the RL reconfiguration request, the RNC configures that the NodeB establishes the communication with the UE in the 64QAM mode, or establishes the communication with the UE in the MIMO mode.

In Step 403, after completing the configuration of the NodeB, the RNC configures the UE according to the configuration of the NodeB, so as to complete the synchronization of the resource between the UE and the NodeB. For example, in the RL reconfiguration request, the RNC configures that the NodeB has the 64QAM mode, and according to the configuration of the NodeB, the RNC configures that the UE establishes the communication in the 64QAM mode through radio bearer establishment information.

According to the embodiment, when the RNC performs the synchronization of the capability, the configuration situation, and the logic resource status of the NodeB with the NodeB, the resource status indication information sent by the NodeB includes the IE indicating whether the NodeB supports the combination mode of the 64QAM and the MIMO, such that the RNC clearly knows whether the NodeB supports the combination mode of the 64QAM and the MIMO, and does not configure the combination mode for the NodeB, when the NodeB does not support the mode. Therefore, the situation, in which the RNC performs the false configuration on the NodeB to result in that the NodeB cannot establish the RL, is avoided. Here, the NodeB can successfully establish the RL, and the UE may use the network normally. Meanwhile, when the RNC configures the NodeB and the UE, the synchronization of the resource between the NodeB and the UE is achieved, and the situation, in which the NodeB and the UE do not understand or make a false understanding on the information of each other, is avoided, such that the communication between the UE and the network side is not disordered, and the UE may use the network normally.

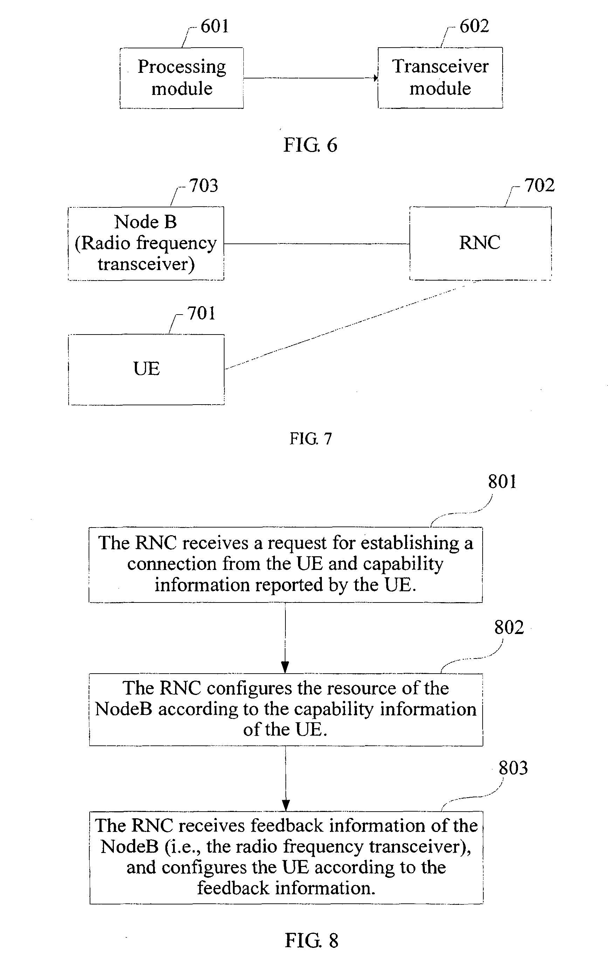

As shown in FIG. 6, the NodeB in the embodiment of the present invention includes a processing module 601 and a transmitting and receiving module602. The transmitting and receiving module602 is adapted to receive information sent by another device and/or send information to another device. For example, when performing information interaction with the RNC, the transmitting and receiving module 602 sends and receives the information. The processing module 601 is adapted to confirm information content sent to the RNC according to the situation of the device itself. For example, when the NodeB sends a resource audit response to the RNC, the processing module 601 instructs the transmitting and receiving module 602 to send the corresponding IE to the RNC, according to whether the NodeB supports the 64QAM mode, whether the NodeB supports the MIMO mode, and whether the NodeB supports the combination mode of the 64QAM and the MIMO. After the RNC receives the IE indicating the mode supported by the NodeB and sent by the transmitting and receiving module 602, the processing method is the same as the embodiment, and is not described in detail herein. The processing module 601 is specifically adapted to synchronize with the corresponding RNC, and configure the resource of the NodeB according to the configuration information received by the transceiver module.

In addition, the processing module 601 of the NodeB as shown in FIG. 6 may be further adapted to instruct the transmitting and receiving module 602 to send the corresponding IE to the RNC, according to whether the NodeB supports the 64QAM mode, whether the NodeB supports the MIMO mode, and whether the NodeB supports the combination mode of the 64QAM and the MIMO, when the NodeB sends the resource status indication information to the RNC.

That is to say, when the processing module 601 synchronizes with the corresponding RNC, the processing module 601 sends the resource audit response including the capability information supported by the NodeB to the RNC through the transmitting and receiving module 602, or sends the resource status indication information including the capability information supported by the NodeB to the RNC through the transmitting and receiving module 602.

A system according to the embodiment of the present invention is as shown in FIG. 7. A UE 701 is adapted to send a request of establishing a connection to an RNC 702, report a capability of the UE 701, and establish a connection with a NodeB 703 according to configuration performed by the RNC 702 on the UE 701. The NodeB 703 is adapted to perform synchronization of a capability, a configuration situation, and a logic resource status of the NodeB 703 with the RNC 702 through a resource auditing process and/or resource status indication information, and establish the connection with the UE 701 according to the configuration of the RNC 702. The RNC 702 is adapted to receive the request of establishing the connection from the UE 701, receive the capability information reported by the UE 701, perform the synchronization of the resource with the NodeB 703, and configure the resources of the NodeB 703 and the UE 701 according to the capability of the NodeB 703 and the capability of the UE 701. The NodeB 703 is the NodeB as shown in FIG. 6.

In the system as shown in FIG. 7, the NodeB 703 and the RNC 702 perform the synchronization of the capability, the configuration situation, and the logic resource status of the NodeB 703 in a nonscheduled manner according to the status and the event trigger of the NodeB 703. For example, during the resource auditing process and/or the resource status indication information, the RNC 702 and the NodeB 703 perform the synchronization of the resource. When the UE 701 needs to establish the connection, the UE 701 sends the request of establishing the connection to the RNC 702 and reports the capability information of the UE 701, and the RNC 702 configures the resource of the NodeB 703 according to the information reported by the UE 701 and the capability of the NodeB 703. When the UE 701 supports the combination mode of the 64QAM and the MIMO, if the NodeB 703 only supports the 64QAM mode and the MIMO mode, the RNC 702 selects to configure the NodeB 703 according to the 64QAM mode or the MIMO mode, and configures the UE 701 to have the same mode. Therefore, the RNC 702 clearly knows the capability of the NodeB 703, so as to configure the NodeB 703 according to the capability reported by the UE 701 and the capability of the NodeB 703, and the situation, in which the configuration performed by the RNC 702 on the NodeB 703 is different from the capability of the NodeB 703, is avoided, such that the NodeB 703 may successfully establish the RL, and the UE 701 may use the network normally. Meanwhile, the NodeB 703 and the UE 701 are configured to have the same mode, so as to successfully establish the connection, and the UE 701 may use the network normally.

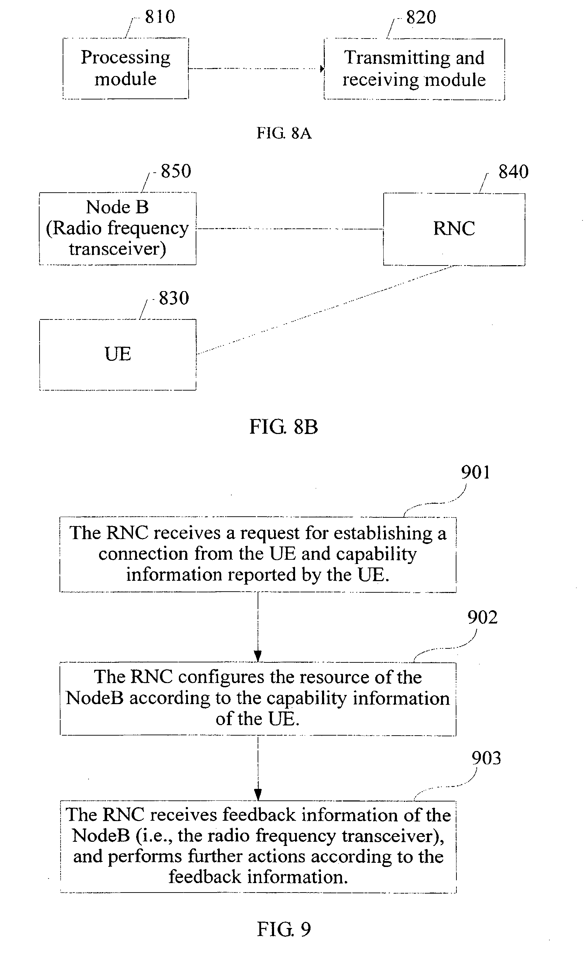

The method for radio access network resource configuration as shown in FIG. 8 may solve the problems existing in the prior art. The method for radio access network resource configuration includes the following steps.

In Step 801, when the UE initiates a call, the RNC receives a request of establishing a connection from the UE and capability information reported by the UE, and accordingly acquires a capability of the UE, for example, the UE supports the combination mode of the 64QAM and the MIMO.

In Step 802, after acquiring the capability of the UE, the RNC configures the resource of the NodeB for the current UE according to the capability of the UE and the capability of the NodeB, so as to establish the communication between the UE and the NodeB. For example, during the previous synchronization with the NodeB, the RNC acquires that the NodeB may support the 64QAM mode and the MIMO mode from two independent IEs reported by the NodeB, so as to mis-judge that the NodeB supports the combination mode of the 64QAM and the MIMO. The capability reported by the UE is that the UE supports the combination mode of the 64QAM and the MIMO, such that the RNC configures that the NodeB has the combination mode of the 64QAM and the MIMO for the current UE.

In Step 803, after the RNC configures the NodeB, if the capability of the NodeB does not match, the NodeB selects the supported mode, and reports the mode to the RNC. When the resource configuration performed by the RNC on the NodeB and the capability of the NodeB do not match, it refers to that the NodeB cannot implement the resource configured by the RNC. For example, the RNC configures that the NodeB adopts the combination mode of the MIMO and the 64QAM, but the NodeB does not support the combination mode of the 64QAM and the MIMO, and in this case, the configuration performed by the RNC on the NodeB and the capability of the NodeB do not match. The RNC configures the UE according to the feedback information sent by the NodeB. For example, the RNC configures that the NodeB has the combination mode of the 64QAM and the MIMO for the current UE, but the NodeB does not support the combination mode, such that the NodeB selects the supported mode being the 64QAM or the MIMO to configure the NodeB, and reports the adopted mode to the RNC. The RNC configures that the UE has the same mode as the NodeB according to the feedback information sent by the NodeB, so as to enable the UE to establish the communication with the NodeB.

According to this embodiment, when performing the synchronization of the capability, the configuration situation, and the logic resource status of the NodeB with the NodeB, the RNC cannot entirely correctly know the capability of the NodeB, for example, when the NodeB supports the 64QAM mode and the MIMO mode at the same time, the RNC cannot know whether the NodeB supports the combination mode of the 64QAM and the MIMO, but when the RNC mis-judges that the NodeB supports the combination mode of the 64QAM and the MIMO and accordingly configures the NodeB, the NodeB may select to adopt the 64QAM mode or the MIMO mode and gives the feedback to the RNC, such that the establishment of the RL may not fail due to the false configuration, and the UE may still use the network normally. Further, in the case of mis-judgement, the RNC may still make the resource configuration of the UE and the NodeB achieve consistency. Therefore, the UE and the NodeB may correctly understand the information of each other, and establish the normal communication, such that the UE may use the network normally and effectively.

As shown in FIG. 8A, the NodeB used in the embodiment includes a processing module 810 and a transmitting and receiving module820. The transmitting and receiving module820 is adapted to receive information sent by another device and/or send information to another device. For example, the transmitting and receiving module820 receives configuration information sent by the RNC and sends feedback information to the RNC. The processing module 810 is adapted to determine whether the configuration information sent by the RNC matches the capability of the NodeB, and if not, select the matching capability for performing the configuration. For example, when the RNC requires the NodeB to configure the combination mode of the 64QAM and the MIMO, but the processing module 810 determines that the NodeB does not support the combination mode of the 64QAM and the MIMO, the processing module 810 selects the 64QAM or the MIMO to configure the NodeB, and gives the feedback of the specific mode adopted by the NodeB to the RNC through the transmitting and receiving module820. Therefore, when the configuration and the capability of the NodeB do not match, the establishment of the RL may not fail, and the RNC can configure the UE according to the feedback information sent by the NodeB and enable the UE to adopt the same mode as the NodeB, such that the UE can use the network normally.

The system of the embodiment of the present invention is as shown in FIG. 8B. A UE 830 is adapted to send a request of establishing a connection to an RNC 840, report a capability of the UE 830, and establish a connection with a NodeB 850 according to configuration performed by the RNC 840 on the UE 830. The NodeB 850 is adapted to perform synchronization of a capability, a configuration situation, and a logic resource status of the NodeB 850 with the RNC 840, and when the received configuration information and the capability of the NodeB 850 do not match, the NodeB 850 is adapted to select the matching capability to perform the configuration, give a feedback of the configuration situation to the RNC 840, and establish the connection with the UE 830 according to the configuration. The RNC 840 is adapted to receive the request of establishing the connection from the UE 830, receive the capability information reported by the UE 830, perform the synchronization of the resource with the NodeB 850, and configure the resources of the NodeB 850 and the UE 830 according to the capability of the NodeB 850 and the capability of the UE 830. The NodeB 850 is the NodeB as shown in FIG. 8A.

In the system as shown in FIG. 8B, the NodeB 850 and the RNC 840 perform the synchronization of the capability, the configuration situation, and the logic resource status of the NodeB 850 in a nonscheduled manner according to the status and the event trigger of the NodeB 850. For example, during the resource auditing process and/or in the resource status indication information, the RNC 840 and the NodeB 850 perform the synchronization of the resource. However, during the synchronization process of the RNC 840 and the NodeB 850, if the NodeB 850 supports the 64QAM mode and the MIMO mode at the same time, the RNC 840 considers that the NodeB 850 supports the combination mode of the 64QAM and the MIMO. When the UE needs to establish the connection, the UE 830 sends the request of establishing the connection to the RNC 840 and reports the capability information of the UE 830, and the RNC 840 configures the resource of the NodeB 850 according to the information reported by the UE 830 and the capability of the NodeB 850. When the NodeB 850 determines that the configuration information sent by the RNC 840 and the capability of the NodeB 850 do not match, the NodeB 850 selects the mode matching the capability thereof to perform the configuration, and gives the feedback to the RNC 840. For example, when the RNC 840 configures that the NodeB 850 adopts the combination mode of the 64QAM and the MIMO, but the NodeB 850 does not support the combination mode, the NodeB 850 selects the 64QAM or the MIMO mode to perform the configuration, and gives the feedback of the mode adopted by the NodeB 850 to the RNC 840. Therefore, the establishment of the RL may not fail due to the fact that the configuration and the capability of the NodeB 850 do not match, and the UE 830 may use the network normally. Meanwhile, the RNC 840 configures the UE 830 according to the feedback mode sent by the NodeB 850, such that the configuration of the UE 830 and the configuration of the NodeB 850 are consistent, and the NodeB 850 and the UE 830 may understand the information of each other; therefore, the communication between the UE and the network side is not disordered, and the UE 830 may use the network normally.

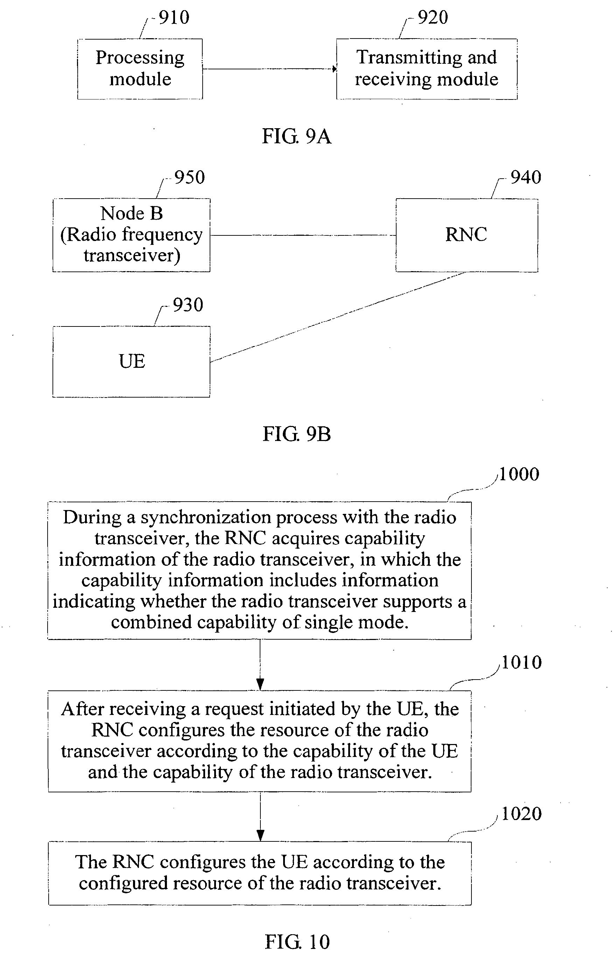

The method for radio access network resource configuration as shown in FIG. 9 may also solve the problems existing in the prior art. The method for radio access network resource configuration includes the following steps.

In Step 901, when the UE initiates a call, the RNC receives a request of establishing a connection from the UE and capability information reported by the UE, and accordingly acquires a capability of the UE, for example, the UE supports the combination mode of the 64QAM and the MIMO.

In Step 902, after acquiring the capability of the UE, the RNC configures the resource of the NodeB for the current UE according to the capability of the UE and the capability of the NodeB, so as to establish the communication between the UE and the NodeB. For example, during the previous synchronization with the NodeB, the RNC acquires that the NodeB may support the 64QAM mode and the MIMO mode from two independent IEs reported by the NodeB, so as to mis-judge that the NodeB supports the combination mode of the 64QAM and the MIMO. The capability reported by the UE is that the UE supports the combination mode of the 64QAM and the MIMO, such that the RNC configures that the NodeB has the combination mode of the 64QAM and the MIMO for the current UE.

In Step 903, after the RNC configures the NodeB, if the capability of the NodeB does not match, the NodeB returns a configuration failure and a failure reason to the RNC. The RNC performs further actions according to the feedback information sent by the NodeB. The further actions may be that the RNC selects suitable configuration according to the feedback failure reason to perform the configuration again; or the RNC completes the synchronization of the resource of the NodeB according to the feedback failure reason, gives the feedback to the UE that the establishment of the communication fails, and instructs the UE to initiate a call again. For example, the RNC configures that the NodeB has the combination mode of the 64 QAM and the MIMO for the current UE, but the NodeB does not support the combination mode, such that the NodeB returns the information of the configuration failure and the failure reason, in which the failure reason is that the NodeB does not support the combination mode of the 64 QAM and the MIMO. Here, the RNC may reconfigure that the NodeB has the 64QAM mode or the MIMO mode according to the feedback failure reason sent by the NodeB. Here, although the NodeB returns that the configuration is false, the establishment of the RL may not fail, and the UE may still use the network normally.

After receiving the feedback failure reason sent by the NodeB, the RNC may perform the synchronization of the capability of the NodeB according to the failure reason. Here, the RNC clearly knows that the NodeB does not support the combination mode of the 64QAM and the MIMO, and notifies the UE that the connection fails and a call needs to be initiated again. Here, although the establishment of the RL fails due to the fact that the configuration not matching the capability cannot be performed on the NodeB, when the RL is established in the next time, the RNC may not perform the false configuration on the NodeB, so as to successfully establish the RL, such that the UE may still use the network normally.

After the RNC adopts the further processing method, the resource configuration of the UE and the resource configuration of the NodeB are consistent, and the UE and the NodeB may understand the information of each other; therefore, the communication between the UE and the network side is not disordered, and the UE may use the network normally.

As shown in FIG. 9A, the NodeB used in the embodiment includes a processing module 910 and a transmitting and receiving module920. The transmitting and receiving module920 is adapted to receive information sent by another device and/or send information to another device. For example, the transmitting and receiving module920 receives configuration information sent by the RNC and sends feedback information to the RNC. The processing module 910 is adapted to determine whether the configuration information sent by the RNC matches the capability of the NodeB, and if not, the processing module 910 sends the information of the configuration failure and the failure reason to the RNC through the transmitting and receiving module920. For example, when the RNC requests the NodeB to configure the combination mode of the 64QAM and the MIMO, but the processing module 910 determines that the NodeB does not support the combination mode of the 64QAM and the MIMO, the processing module 910 sends the information of the configuration failure and the failure reason to the RNC through the transmitting and receiving module920, in which the failure reason is that the NodeB does not support the combination mode of the 64QAM and the MIMO. Therefore, according to the feedback information sent by the NodeB, the RNC can reconfigure the UE or perform the synchronization again and wait for the UE to initiate a call again. The two processing manners can both successfully establish the RL, and enable the UE to adopt the same mode as the NodeB, such that the UE can use the network normally.

The system of the embodiment of the present invention is as shown in FIG. 9B. A UE 930 is adapted to send a request of establishing a connection to an RNC 940, report a capability of the UE 930, and establish a connection with a NodeB 950 according to configuration performed by the RNC 940 on the UE 930. The NodeB 950 is adapted to perform synchronization of a capability, a configuration situation, and a logic resource status of the NodeB 950 with the RNC 940, and when the received configuration information and the capability of the NodeB 950 do not match, the NodeB 950 returns the configuration failure and the failure reason to the RNC 940 and establishes the connection with the UE 930 according to the configuration. The RNC 940 is adapted to receive the request of establishing the connection from the UE 930, receive the capability information reported by the UE 930, perform the synchronization of the resource with the NodeB 950, configure the resources of the NodeB 950 and the UE 930 according to the capability of the NodeB 950 and the capability of the UE 930, and after the NodeB 950 returns the failure reason, according to the failure reason, reconfigure the NodeB 950 or perform the synchronization again and wait for the UE 930 to initiate a call again. The NodeB 950 is the NodeB as shown in FIG. 9A.

In the system as shown in FIG. 9B, the NodeB 950 and the RNC 940 perform the synchronization of the capability, the configuration situation, and the logic resource status of the NodeB 950 in a nonscheduled manner according to the status and the event trigger of the NodeB 950. For example, during the resource auditing process and/or the resource status indication information, the RNC 940 and the NodeB 950 perform the synchronization of the resource. However, during the synchronization process of the RNC 940 and the NodeB 950, if the NodeB 950 supports the 64QAM mode and the MIMO mode at the same time, the RNC 940 considers that the NodeB 950 supports the combination mode of the 64QAM and the MIMO. When the UE 930 needs to establish the connection, the UE 930 sends the request of establishing the connection to the RNC 940 and reports the capability information of the UE 930, and the RNC 940 configures the resource of the NodeB 950 according to the information reported by the UE 930 and the capability of the NodeB 950. When the NodeB 950 determines that the configuration information sent by the RNC 940 and the capability of the NodeB 950 do not match, the NodeB 950 returns the configuration failure and the failure reason to the RNC 940. For example, when the RNC 940 configures that the NodeB 950 adopts the combination mode of the 64QAM and the MIMO, but the NodeB 950 does not support the combination mode, the NodeB 950 returns the configuration failure and the failure reason being that the NodeB 950 does not support the combination mode of the 64QAM and the MIMO to the RNC 940. The RNC 940 clearly acquires that the NodeB 950 does not support the combination mode of the 64QAM and the MIMO according to the feedback of the NodeB 950, and notifies the UE 930 that the connection fails and a call needs to be initiated again. The RNC 940 may also reconfigure the NodeB 950 to have the 64QAM mode or the MIMO mode according to the feedback of the NodeB 950, and configure the UE 930 according to the same mode. The two manners can both successfully establish the RL, and enable the UE 930 to use the network normally. Meanwhile, the configurations performed by the RNC 940 on the UE 930 and the NodeB 950 are consistent, and the NodeB 950 and the UE 930 may understand the information of each other, such that the communication between the UE 930 and the network side is not disordered, and the UE 930 may use the network normally.

The method for radio access network resource configuration as shown in FIG. 10 may also solve the problems existing in the prior art. The method for radio access network resource configuration includes the following steps.

In Step 1000, during a synchronization process with the radio transceiver, the RNC acquires the capability information of the radio transceiver, in which the capability information includes information indicating whether the radio transceiver supports a combined capability of single mode.

The synchronization process in Step 1000 may be a resource auditing process; here, the acquiring the capability information of the radio transceiver may be that the RNC acquires the capability information of the radio transceiver from a resource audit response sent by the radio transceiver.

The synchronization process in Step 1000 may also be that the RNC receives resource status indication information sent by the radio transceiver; here, the acquiring the capability information of the radio transceiver may be that the RNC acquires the capability information of the radio transceiver from the resource status indication information.

In Step 1010, after receiving a request initiated by the UE, the RNC configures a resource of the radio transceiver according to the capability of the UE and the capability of the radio transceiver.

Further, the configuring, by the RNC, the resource of the radio transceiver according to the capability of the UE and the capability of the radio transceiver may be that when the capability of the UE and the capability of the radio transceiver do not match, the RNC selects a mode supported by the radio transceiver according to the acquired capability of the radio transceiver during the synchronization process, and configures the radio transceiver to the selected mode.

A specific example in which the capabilities do not match is that, the UE supports the combined capability of single mode, but the radio transceiver does not support the combined capability of single mode.

A specific example of the RNC selects a mode supported by the radio transceiver according to the acquired capability of the radio transceiver during the synchronization process, and configures the radio transceiver with the selected mode is that, when the RNC acquires that the radio transceiver supports the single mode and does not support the combined capability of single mode during the synchronization process, the RNC selects the single mode supported by the radio transceiver and configures the radio transceiver to the single mode.

In Step 1020, the RNC configures the UE according to the configured resource of the radio transceiver. The RNC may configure the UE to have the same mode as the radio transceiver.

## Claims

1. A method for network resource configuration, comprising:
receiving (202), by a Radio Network Controller, RNC, capability information of a NodeB during a synchronization process with the NodeB, wherein the capability information comprises information indicating whether the NodeB supports the 64QAM mode, whether the NodeB supports the MIMO mode, and whether the NodeB supports the combination mode of the 64QAM and the MIMO;
receiving (203), by the RNC, a request initiated by User Equipment UE, the request comprising capability information of the UE;
after receiving the request initiated by the UE configuring (203), by the RNC, a resource of the NodeB according to the capability information of the UE and the capability information of the NodeB; and
configuring (204), by the RNC, the UE according to the configured resource of the NodeB.

2. The method according to claim 1, wherein
the synchronization process is a resource auditing process (201, 202), and the acquiring the capability information of the NodeB comprises: acquiring, by the RNC, the capability information of the NodeB from a resource audit response sent by the NodeB.

3. The method according to claim 1 or 2, wherein
the synchronization process comprises: receiving (401), by the RNC, resource status indication information sent by the NodeB; and the acquiring the capability information of the NodeB comprises: acquiring, by the RNC, the capability information of the NodeB from the resource status indication information.

4. The method according to any one of claim 1 to 3, wherein
the configuring, by the RNC, the resource of the NodeB according to the capability of the UE and the capability of the NodeB comprises: when the capability of the UE and the capability of the NodeB do not match, the RNC selects a mode supported by the NodeB according to the acquired capability of the NodeB during the synchronization process and configures the NodeB to the selected mode.

5. The method according to claim 4, wherein, the capability of the UE and the capability of the NodeB do not match comprises: the UE supports the combination mode of the 64QAM and the MIMO, and the NodeB does not support the combination mode of the 64QAM and the MIMO;
the RNC selects a mode supported by the NodeB according to the acquired capability of the NodeB during the synchronization process and configures the NodeB to the selected mode comprises: when the RNC acquires that the NodeB supports the 64QAM mode and the MIMO mode and does not support the combination mode of the 64QAM and the MIMO during the synchronization process, the RNC selects any one of the 64QAM mode and the MIMO mode supported by the NodeB and configures the NodeB to the selected mode; and
the configuring, by the RNC, the UE according to the configured resource of the NodeB comprises: configuring, by the RNC, the UE with the same mode as the NodeB.

6. A Radio Network Controller, RNC, wherein the RNC is adapted to receive capability information of a NodeB during a synchronization process with the NodeB, wherein the capability information comprises information indicating whether the NodeB supports the 64QAM mode, whether the NodeB supports the MIMO mode, and whether the NodeB supports the combination mode of the 64QAM and the MIMO; and
the RNC is further adapted to receive a request sent by the UE, the request comprising capability information of the UE, and configure a resource of the NodeB according to the capability information of the UE and the capability information of the NodeB; and configure a resource of the UE according to the configured resource of the NodeB.

7. The RNC according to claim 6, wherein the RNC is adapted to select a mode supported by the NodeB to configure the resource of the NodeB according to the capability of the NodeB, and configure the UE with the same mode, when the capability of the UE and the capability of the corresponding NodeB do not match.

8. A method for network resource configuration, comprising:
sending, by a NodeB, capability information of the NodeB to a Radio Network Controller, RNC, wherein the capability information comprises information indicating whether the NodeB supports the 64QAM mode, whether the NodeB supports the MIMO mode, and whether the NodeB supports the combination mode of the 64QAM and the MIMO;
receiving, by the NodeB, a configuration information, wherein the configuration information is sent by RNC according to the capability information of the NodeB and a capability of User Equipment, UE, after the RNC received a request initiated by the UE, the request comprising capability information of the UE; and
configuring, by the NodeB, a resource of the NodeB according to the configuration information.

9. The method according to claim 8, wherein, the sending, by a NodeB, capability information of the NodeB to a RNC comprises: sending, by the NodeB, a resource audit response or a resource status indication information; and the resource audit response or the resource status indication information comprises the capability information.

## Patentansprüche

1. Verfahren zur Konfiguration von Netzwerkbetriebsmitteln, umfassend:
Empfangen (202) von Leistungsfähigkeitsinformationen eines NodeB in einer Funknetzwerkssteuereinheit (Radio Network Controller, RNC), während eines Synchronisationsprozesses mit dem NodeB, wobei die Leistungsfähigkeitsinformationen Informationen umfassen, die anzeigen, ob der NodeB den 64-QAM-Modus unterstützt, ob der NodeB den MIMO-Modus unterstützt und ob der NodeB den Kombinationsmodus aus 64-QAM und MIMO unterstützt;
Empfangen (203) einer Anfrage, die von einer Benutzervorrichtung (User Equipment, UE) initiiert wurde, in der RNC, wobei die Anfrage Leistungsfähigkeitsinformationen der UE umfasst;
nach dem Empfangen der von der UE initiierten Anfrage Konfigurieren (203) eines Betriebsmittels des NodeB durch die RNC gemäß den Leistungsfähigkeitsinformationen der UE und den Leistungsfähigkeitsinformationen des NodeB; und
Konfigurieren (204) der UE durch die RNC gemäß dem konfigurierten Betriebsmittel des NodeB.

2. Verfahren nach Anspruch 1, wobei
der Synchronisationsprozess ein Betriebsmittelüberwachungsprozess (201, 202) ist und das Erfassen der Leistungsfähigkeitsinformationen des NodeB umfasst: Erfassen der Leistungsfähigkeitsinformationen des NodeB durch die RNC aus einer von dem NodeB gesendeten Betriebsmittelüberwachungsantwort.

3. Verfahren nach Anspruch 1 oder 2, wobei
der Synchronisationsprozess umfasst: Empfangen (401) von Informationen der Betriebsmittelzustandsanzeige, die durch den NodeB gesendet wurden, in der RNC und wobei das Erfassen der Leistungsfähigkeitsinformationen des NodeB umfasst: Erfassen der Leistungsfähigkeitsinformationen des NodeB durch die RNC aus den Informationen der Betriebsmittelzustandsanzeige.

4. Verfahren nach einem der Ansprüche 1 bis 3, wobei
das Konfigurieren des Betriebsmittels des NodeB durch die RNC gemäß der Leistungsfähigkeit der UE und der Leistungsfähigkeit des NodeB umfasst: wenn die Leistungsfähigkeit der UE und die Leistungsfähigkeit des NodeB nicht übereinstimmen, Auswählen eines von dem NodeB gestützten Modus durch die RNC gemäß der während des Synchronisationsprozesses erfassten Leistungsfähigkeit des NodeB und Konfigurieren des NodeB auf den ausgewählten Modus.

5. Verfahren nach Anspruch 4, wobei das fehlende Übereinstimmen der Leistungsfähigkeit der UE und der Leistungsfähigkeit des NodeB umfasst, dass die UE den Kombinationsmodus aus 64-QAM und MIMO unterstützt und der NodeB den Kombinationsmodus aus 64-QAM und MIMO nicht unterstützt;
wobei das Auswählen eines Modus, der von dem NodeB gemäß der während des Synchronisationsprozesses erfassten Leistungsfähigkeit des NodeB unterstützt wird, durch die RNC und das Konfigurieren des NodeB auf den ausgewählten Modus durch die RNC umfasst, dass, wenn die RNC erfasst, dass der NodeB während des Synchronisationsprozesses den 64-QAM-Modus und den MIMO-Modus unterstützt, aber nicht den Kombinationsmodus von 64-QAM und MIMO unterstützt, die RNC einen beliebigen aus dem 64-QAM-Modus und dem MIMO-Modus auswählt, die beide von dem NodeB unterstützt werden, und den NodeB auf den ausgewählten Modus konfiguriert; und
das Konfigurieren der UE durch die RNC gemäß dem konfigurierten Betriebsmittel des NodeB umfasst: Konfigurieren der UE durch die RNC mit dem gleichen Modus wie den NodeB.

6. Funknetzwerkssteuereinheit (Radio Network Controller, RNC), wobei die RNC ausgelegt ist, Leistungsfähigkeitsinformationen eines NodeB während eines Synchronisationsprozesses mit dem NodeB zu empfangen, wobei die Leistungsfähigkeitsinformationen Informationen umfassen, die anzeigen, ob der NodeB den 64-QAM-Modus unterstützt, ob der NodeB den MIMO-Modus unterstützt und ob der NodeB den Kombinationsmodus aus 64-QAM und MIMO unterstützt; und
wobei die RNC außerdem ausgelegt ist, eine von der UE gesendete Anfrage zu empfangen, wobei die Anfrage Leistungsfähigkeitsinformationen der UE umfasst, und ein Betriebsmittel des NodeB gemäß der Leistungsfähigkeitsinformationen der UE und der Leistungsfähigkeitsinformationen des NodeB zu konfigurieren und ein Betriebsmittel der UE gemäß dem konfigurierten Betriebsmittel des NodeB zu konfigurieren.

7. RNC nach Anspruch 6, wobei die RNC ausgelegt ist, einen Modus auszuwählen, der von dem NodeB unterstützt wird, um das Betriebsmittel des NodeB gemäß der Leistungsfähigkeit des NodeB zu konfigurieren und um die UE mit dem gleichen Modus zu konfigurieren, wenn die Leistungsfähigkeit der UE und die Leistungsfähigkeit des entsprechenden NodeB nicht übereinstimmen.

8. Verfahren zum Konfigurieren von Netzwerkbetriebsmitteln, umfassend:
Senden von Leistungsfähigkeitsinformationen des NodeB durch einen NodeB an eine Funknetzwerkssteuereinheit (Radio Network Controller, RNC), wobei die Leistungsfähigkeitsinformationen Informationen umfassen, die anzeigen, ob der NodeB den 64-QAM-Modus unterstützt, ob der NodeB den MIMO-Modus unterstützt und ob der NodeB den Kombinationsmodus aus 64-QAM und MIMO unterstützt;
Empfangen von Konfigurationsinformationen in dem NodeB, wobei die Konfigurationsinformationen von der RNC gemäß den Leistungsfähigkeitsinformationen des NodeB und einer Leistungsfähigkeit einer Benutzervorrichtung (User Equipment, UE) gesendet wird, nachdem die RNC eine von der UE initiierte Anfrage empfangen hat, wobei die Anfrage Leistungsfähigkeitsinformationen der UE umfasst; und
Konfigurieren eines Betriebsmittels des NodeB durch den NodeB gemäß den Konfigurationsinformationen.

9. Verfahren nach Anspruch 8, wobei das Senden von Leistungsfähigkeitsinformationen des NodeB durch den NodeB an die RNC umfasst: Senden einer Betriebsmittelüberwachungsantwort oder von Informationen der Betriebsmittelzustandsanzeige durch den NodeB; und wobei die Betriebsmittelüberwachungsantwort oder die Informationen der Betriebsmittelzustandsanzeige die Leistungsfähigkeitsinformationen umfassen.

## Revendications

1. Procédé de configuration de ressources de réseau, comprenant :
la réception (202), par un Contrôleur de Réseau Radio, RNC (Radio Network Controler), d'informations de capacité d'un Noeud B pendant un processus de synchronisation avec le Noeud B, les informations de capacité comprenant des informations indiquant si le Noeud B prend en charge le mode 64QAM, si le Noeud B prend en charge le mode MIMO et si le Noeud B prend en charge le mode combiné 64QAM et MIMO ;
la réception (203), par le RNC, d'une demande émise par un Equipement d'Utilisateur, UE (User Equipment), la demande comprenant des informations de capacité de l'UE ;
après réception de la demande émise par l'UE, la configuration (203), par le RNC, d'une ressource du Noeud B conformément aux informations de capacité de l'UE et aux informations de capacité du Noeud B ; et
la configuration (204), par le RNC, de l'UE conformément à la ressource configurée du Noeud B.

2. Procédé selon la revendication 1, dans lequel
le processus de synchronisation est un processus d'audit de ressources (201, 202), et l'acquisition des informations de capacité du Noeud B comprend : l'acquisition, par le RNC, des informations de capacité du Noeud B à partir d'une réponse d'audit envoyée par le Noeud B.

3. Procédé selon la revendication 1 ou 2, dans lequel
le processus de synchronisation comprend :
la réception (401), par le RNC, d'informations d'indication d'état de ressources envoyées par le Noeud B ; et l'acquisition des informations de capacité du Noeud B comprend : l'acquisition, par le RNC, des informations de capacité du Noeud B à partir des informations d'indication d'état de ressources.

4. Procédé selon l'une quelconque des revendications 1 à 3, dans lequel
la configuration, par le RNC, des ressources du Noeud B conformément à la capacité de l'UE et à la capacité du Noeud B comprend : lorsque la capacité de l'UE et la capacité du Noeud B ne concordent pas, le RNC sélectionne un mode pris en charge par le Noeud B conformément à la capacité acquise du Noeud B pendant le processus de synchronisation et configure le Noeud B dans le mode sélectionné.

5. Procédé selon la revendication 4, dans lequel le fait que la capacité de l'UE et la capacité du Noeud B ne concordent pas comprend : l'UE prend en charge le mode combiné 64QAM et MIMO, et le Noeud B ne prend pas en charge le mode combiné 64QAM et MIMO ;
le fait que le RNC sélectionne un mode pris en charge par le Noeud B conformément à la capacité acquise du Noeud B pendant le processus de synchronisation et configure le Noeud B dans le mode sélectionné comprend : lorsque le RNC acquiert le fait que le Noeud B prend en charge le mode 64QAM et le mode MIMO et ne prend pas en charge le mode combiné 64QAM et MIMO pendant le processus de synchronisation, le RNC sélectionne n'importe lequel du mode 64QAM et du mode MIMO pris en charge par le Noeud B et configure le Noeud B dans le mode sélectionné ; et
la configuration, par le RNC, de l'UE conformément à la ressource configurée du Noeud B comprend : la configuration, par le RNC, de l'UE avec le même mode que le Noeud B.

6. Contrôleur de Réseau Radio, RNC, le RNC étant apte à recevoir des informations de capacité d'un Noeud B pendant un processus de synchronisation avec le Noeud B, les informations de capacité comprenant des informations indiquant si le Noeud B prend en charge le mode 64QAM, si le Noeud B prend en charge le mode MIMO et si le Noeud B prend en charge le mode combiné 64QAM et MIMO ; et
le RNC étant en outre apte à recevoir une demande envoyée par l'UE, la demande comprenant des informations de capacité de l'UE, et à configurer une ressource du Noeud B conformément aux informations de capacité de l'UE et aux informations de capacité du Noeud B ; et à configurer une ressource de l'UE conformément à la ressource configurée du Noeud B.

7. RNC selon la revendication 6, le RNC étant apte à sélectionner un mode pris en charge par le Noeud B pour configurer la ressource du Noeud B conformément à la capacité du Noeud B, et à configurer l'UE avec le même mode lorsque la capacité de l'UE et la capacité du Noeud B correspondant ne concordent pas.

8. Procédé de configuration de ressources de réseau, comprenant :
l'envoi, par un Noeud B, d'informations de capacité du Noeud B à un Contrôleur de Réseau Radio, RNC, les informations de capacité comprenant des informations indiquant si le Noeud B prend en charge le mode 64QAM, si le Noeud B prend en charge le mode MIMO et si le Noeud B prend en charge le mode combiné 64QAM et MIMO ;
la réception, par le Noeud B, d'une information de configuration, dans lequel l'information de configuration est envoyée par le RNC conformément aux informations de capacité du Noeud B et à une capacité de l'équipement d'utilisateur, UE, après que le RNC a reçu une demande émise par l'UE, la demande comprenant des informations de capacité de l'UE ; et
la configuration, par le Noeud B, d'une ressource du Noeud B conformément à l'information de configuration.

9. Procédé selon la revendication 8, dans lequel l'envoi, par un Noeud B, d'informations de capacité du Noeud B à un RNC comprend : l'envoi, par le Noeud B, d'une réponse d'audit de ressources ou d'une information d'indication d'état de ressources ; et la réponse d'audit de ressources ou l'information d'indication d'état de ressources comprend les informations de capacité.
